# FASCICULE DE BREVET EUROPEEN

(11) **EP 0 538 133 B1**
(45) Date de publication et mention de la délivrance du brevet: **10.02.1999**
(21) Numéro de dépôt: 92402820.2
(22) Date de dépôt: 15.10.1992
(51) Int. Cl.: G06F 9/445

(54) **Téléchargement d'un système d'exploitation par réseau**
Fernladung eines Betriebssystems über ein Netzwerk
Download of an operating system over a network

(30) Priorité: 17.10.1991 FR 9112837
(43) Date de publication de la demande: 21.04.1993
(73) Titulaire: BULL S.A., 92800 Puteaux (FR)
(72) Inventeur: Abdous, Arave, F-91300 Massy (FR); Dalongville, Didier, F-91940 Gometz le Chatel (FR); Demortain, Stéphane, F-91120 Palaiseau (FR)
(74) Mandataire: Colombe, Michel

(56) Documents cités:
- EP-A- 0 106 213
- EP-A- 0 290 924
- EP-A- 0 358 292
- GB-A- 2 231 180

## Description

La présente invention concerne un procédé de téléchargement d'un système d'exploitation à travers un réseau. Il est connu par la demande de brevet britannique 2 231 180 d'effectuer le chargement d'un premier calculateur relié à travers un réseau à un deuxième calculateur en chargeant un sous-ensemble du système d'exploitation dans la mémoire du premier calculateur le sous-ensemble comprenant les commandes permettant la copie de fichiers, la création d'un répertoire, le formatage du disque ainsi que le fonctionnement d'une connexion à travers le réseau pour ensuite utiliser ce premier sous-ensemble pour transférer du second calculateur l'ensemble des fichiers du système d'exploitation sur le disque du premier calculateur. La méthode de cette demande de brevet, présente l'inconvénient de nécessiter un premier chargement dans la mémoire d'un sous-ensemble du système d'exploitation et ensuite la présence d'un périphérique magnétique tel qu'un disque dur ou un lecteur de disquette sur le premier calculateur dans lequel on va charger le système d'exploitation. Ce type de procédure est incompatible notamment avec le téléchargement de terminaux qui doit s'effectuer dans un temps très court.

Il est également connu par le brevet américain 4 958 278, une méthode de chargement de données ou de programmes dans une pluralité de terminaux. Ces terminaux ne sont pas pourvus de lecteur de disque. Dès qu'une requête de chargement est émise par une des stations qui vient d'être allumée, le serveur envoie la première trame, attend l'acquittement et dès réception de l'acquittement, envoie les trames suivantes. Si un autre terminal émet une requête de chargement en cours d'émission des trames correspondant au chargement d'une première station, la deuxième station va prendre en compte les trames émises à destination de la première station, en notant dans une table le fait qu'il manque les premières trames reçues par la première station. Chaque station doit envoyer son acquittement après l'émission d'une trame. Lorsque toutes les trames ont été émises à destination de la première station, les stations qui sont venues se connecter au réseau ultérieurement, reçoivent les premières trames qu'elles n'avaient pas pu prendre en compte du fait de leur connexion ultérieure. Dans cette méthode, c'est le serveur qui mémorise au moment de l'apparition d'une deuxième station sur le réseau le numéro de la première trame que cette station reçoit et qui en fin de chargement de la première station connectée envoie à l'autre station les trames qu'elles n'avaient pas pu recevoir. Cette méthode oblige chaque station à émettre son acquittement, ce qui nécessite d'avoir des temps d'émission des acquittements différents pour chaque station de façon à éviter les collisions. Ceci introduit un délai entre le fin d'émission d'une trame et l'émission de la trame suivante. Ce délai doit soit être variable en fonction du nombre de station connectée, soit calculé pour correspondre à la configuration maximale.

Toutefois ce dispositif et cette méthode ne permettent qu'un fonctionnement figé selon un programme de téléchargement déterminé effectuant le chargement d'une application fixée une fois pour toutes.

Il est connu par le brevet européen 0 358 282 un procédé de téléchargement d'un système d'exploitation sur des terminaux. Les disques des terminaux ne sont pas nécessaires pour ce procédé. Ce procédé consiste à introduire dans la routine d'initialisation de la carte de communication réseau, une requête à l'ensemble du réseau demandant un amorçage qui sera envoyée dès que l'auto-test des adresses du bus du terminal détectera la présence de la carte. Le serveur répond alors à cette requête en transmettant un programme d'amorçage minimum au terminal qui charge ce programme dans sa mémoire. Ce programme permet par la suite de gérer les interruptions dues à la poursuite de l'amorçage de la station en créant un chaînage entre les interruptions et une demande d'accès fichier serveur. Ce procédé présente l'inconvénient de télécharger dans un premier temps un programme dans la mémoire du terminal ce qui génère une perte de temps et réduit l'espace disponible dans la mémoire de la station.

Un but de l'invention est de proposer une méthode de chargement de terminaux pouvant ne pas comporter d'unité de disque ou de disquette et qui permette pour une architecture de terminaux standards fonctionnant selon le système d'exploitation standard des PC (MSDOS) de charger ultérieurement toutes les applications ou fichiers souhaitables.

Ce but est atteint par le fait que le procédé de téléchargement par un serveur d'au moins un terminal comprenant, une mémoire volatile (RAM) au moins un processeur, une carte de télécommunication permettant la connexion au serveur du réseau, le dit serveur étant pourvu de moyen de télécommunication et de moyen de mémorisation de capacité suffisant pour stocker le protocole de communication, le système d'exploitation des terminaux recopié dans un fichier image, son propre système d'exploitation et les programmes d'application caractérisé en ce qu'il comporte une procédure de téléchargement d'un programme d'amorçage, consistant à transformer la première interruption de lecture du bloc d'amorçage sur le disque local produite par un terminal à la suite de sa mise sous tension en une demande de lecture d'un fichier image mémorisé sur le serveur, le programme de transformation des interruptions (EMUL INT) étant mémorisé dans une mémoire non volatile (PROM) de la carte de communication.

Selon une autre particularité, l'étape de téléchargement du programme d'amorçage consiste à charger dans la mémoire volatile RAM le secteur d'amorçage (BOOT) à lancer l'exécution de ce fichier d'amorçage, à transformer les interruptions de demande d'accès à des fichiers des périphériques magnétiques inexistants sur le terminal en demandes de lecture du fichier image correspondant sur le serveur par une procédure de transformation des coordonnées.

Selon une autre particularité, la procédure de transformation des coordonnées consiste à transformer les coordonnées des secteurs physiques des fichiers des périphériques magnétiques en une numérotation logique de chapitre du fichier image correspondant au secteur du fichier appelé par une table de correspondance secteur, à transmettre vers le serveur la demande de lecture de chapitre à émettre vers l'ensemble des terminaux les chapitres des fichiers images.

Selon une autre particularité, la mémoire volatile RAM du terminal contient après le premier téléchargement du programme d'amorçage, une table d'allocation des fichiers (FAT) établissant une correspondance entre le numéro de disquette, le numéro de tête, le numéro de piste, le numéro de secteur de piste et le nom du fichier ainsi qu'une table de description des secteurs (SDT) établissant une correspondance entre le numéro de disquette, le numéro de piste, le numéro de secteur de piste et le numéro de chapitre du fichier image du serveur.

Selon une autre caractéristique, le procédé permet le téléchargement des fichiers du système d'exploitation constitué par les fichiers IO.SYS, MSDOS.SYS CONFIG.SYS et COMMAND.COM.

Selon une autre caractéristique la table d'allocation des fichiers (FAT) est mémorisée avec le status éternel (KEEP FOR EVER) dans la mémoire vive RAM, ce status étant indiqué par un bit du mot d'état de la carte de description des secteurs.

Selon une autre caractéristique, le procédé permet le téléchargement des fichiers du système d'exploitation constitué par les fichiers IO.SYS, MSDOS.SYS CONFIG.SYS et COMMAND.COM.

Selon une autre caractéristique, le procédé permet le téléchargement des fichiers du système d'exploitation constitué par les fichiers IO.SYS, MSDOS.SYS CONFIG.SYS et COMMAND.DOM.

Selon une autre caractéristique la table d'allocation des fichiers (FAT) est mémorisé avec la status éternel (KEEP FOR EVER) dans la mémoire vive RAM, ce status étant indiqué par un bit du mot d'état de la carte de description des secteurs.

Un autre but est de proposer un procédé de téléchargement de plusieurs terminaux limitant le temps d'attente des terminaux.

Ce but est atteint par le fait que lorsqu'un terminal émet une demande de premier chapitre à destination du serveur celui-ci attend un temps T1 avant de répondre pour s'assurer que d'autres terminaux ne vont pas avoir la même demande.

Selon une autre caractéristique, une demande de premier chapitre par une autre station arrivant avant l'écoulement d'un temps T2 suivant la demande du même premier chapitre par une première station est prise en compte immédiatement et la procédure de téléchargement de l'ensemble des stations ayant émis les demandes est reprise à zéro pour ces stations.

Selon une autre particularité, le serveur ferme la session au bout d'un temps T3 entre l'émission de chaque chapitre et un temps T5 entre chaque émission de trame.

Selon une autre particularité, le serveur émet une trame de fin de chargement lorsqu'un temps T4 après l'émission d'une trame de fin de chapitre, sans qu'aucune autre station n'ait émis une requête.

Selon une autre particularité, les temps T1 à T5 sont paramétrables.

Un autre but de l'invention est de proposer un procédé de téléchargement qui Après la fin du téléchargement d'un premier ensemble de système d'exploitation puisse également télécharger des applications diverses, soit sur requête du terminal, soit sur envoi multi-destinataires (Multicast).

Ce but est atteint par le fait que le procédé comporte une étape d'envoi de trames de données spécifiques aux chapitres qui incluent l'adresse Ethernet de la station réceptrice.

Un autre but est de permettre l'accès au fichier chargé sur le terminal et pour les fichiers inexistants leur téléchargement.

Ce but est atteint par le fait que le terminal lors de l'éxécution d'une instruction d'ouverture de fichier, lit la table d'allocation des fichiers ; détermine ainsi le secteur puis lit la table de description des secteurs pour déterminer le chapitre à rechercher, exécute le chapitre si le chapitre réside dans la RAM exécutée ; émet une requête de téléchargement à destination du serveur, si le chapitre est absent.

Selon une autre particularité, la table de description des secteurs comprend un octet d'état indiquant par un bit la réception du chapitre, par un autre bit son utilisation, par un troisième bit le statut "à conserver toujours", par un quatrième bit le numéro du segment, par un cinquième bit la présence d'une valeur de remplissage et par un sixième bit un secteur spécifique de donnée.

Selon une autre particularité le terminal comporte un registre d'état de la fonction d'interruption émulée permettant dans le cas de la réception d'une trame de fin de téléchargement de déterminer par lecture des registres DL et AL du microprocesseur (213) du terminal s'il faut effectuer une fonction de "chargement de segment de donnée" ou une fonction de clôture ("Shutdown").

D'autres caractéristiques et avantages de la présente invention apparaîtront plus clairement à la lecture de la description ci-après faite en référence aux dessins annexés dans lesquels :
La Figure 1 est une vue schématique de l'ensemble du réseau permettant la mise en oeuvre du procédé de téléchargement ;
La Figure 2 est une représentation schématique du diagramme temporel des échanges entre le serveur et une ou plusieurs stations ;
La Figure 3 est une vue schématique représentant l'état du réseau après chargement du système d'exploitation.
Les Figures 4A à 4C représentent la constitution des différentes trames utilisées dans la procédure de téléchargement.

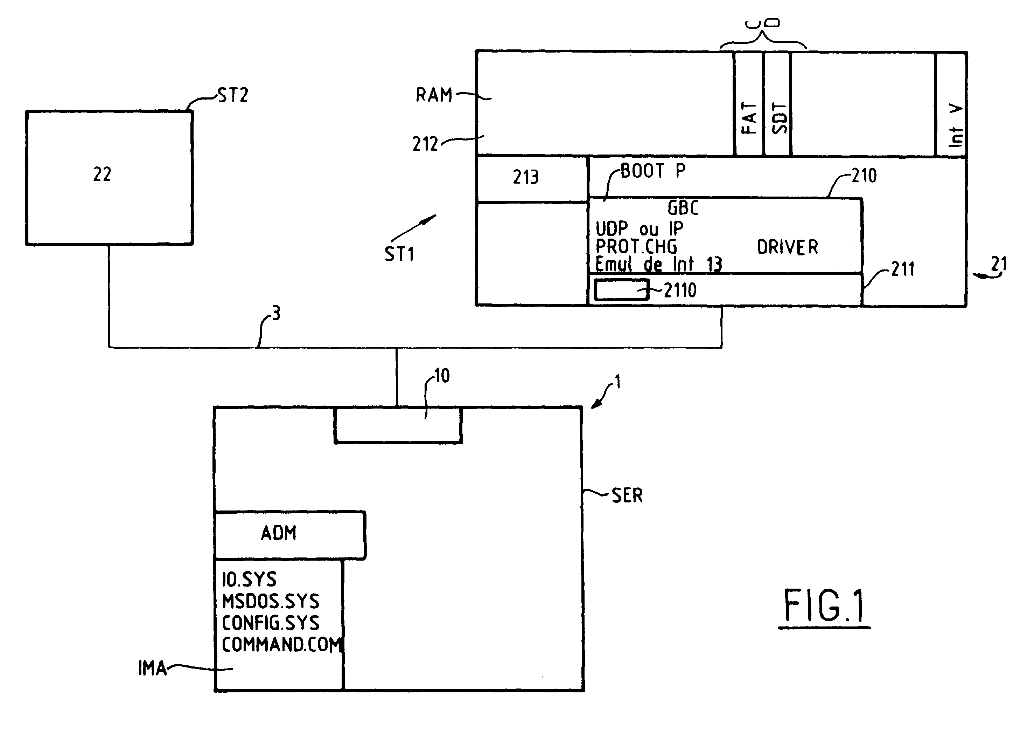

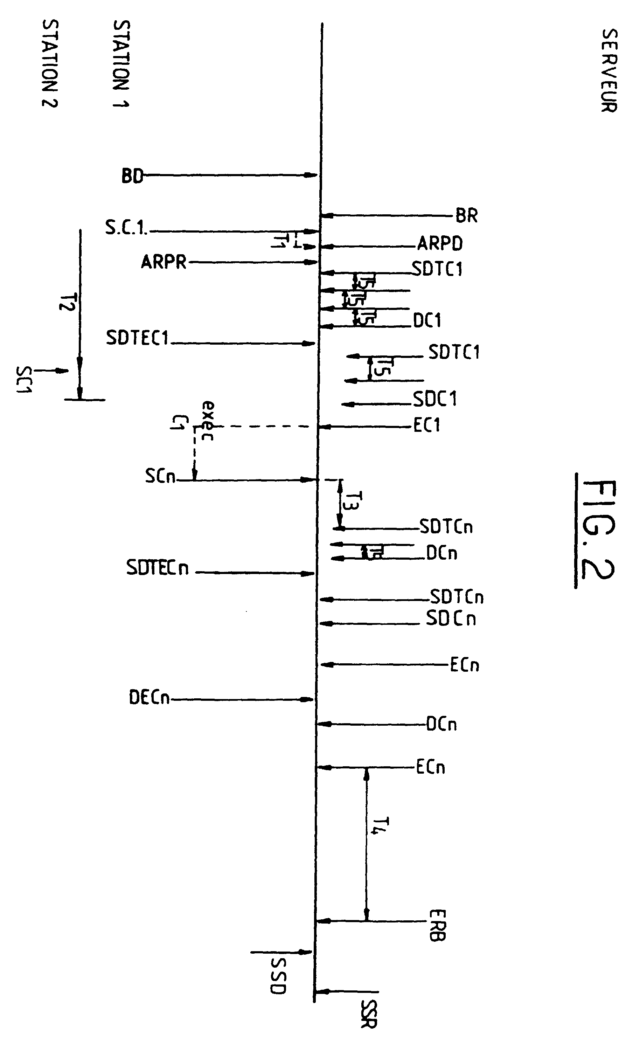

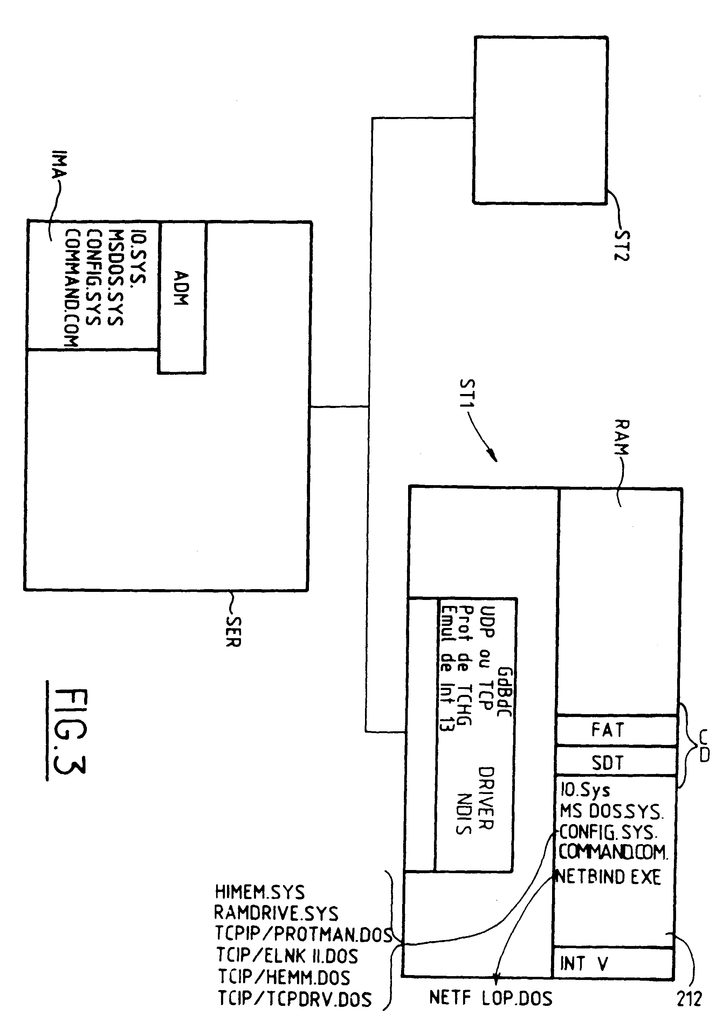

La Figure 1 représente un serveur (1) relié par une carte de télécommunication (10) à un réseau Ethernet (3) et à travers ce réseau Ethernet (3) à au moins un premier (ST1) et deuxième (ST2) terminal. Chaque terminal ST1 (21), ST2 (22) est constitué de manière identique par une carte de communication avec le réseau Ethernet (211) sur laquelle figure un processeur (2110) et une PROM de gestion du boîtier processeur (2110). Cette PROM (2110) outre le programme de gestion du boîtier comporte soit un programme d'établissement de connexion multi-destinataires UDP avec le serveur, soit un programme d'établissement de connexion uni-destinataire (IP) avec le serveur. La PROM contient également un programme d'émulation de l'interruption 13 et de l'interruption 19. Le terminal quant à lui comporte un microprocesseur (213) et une mémoire vive RAM d'au moins 1 Méga-octet de capacité reliée au microprocesseur par le bus. Le microprocesseur (213) communique par le bus avec la carte de télécommunication (211) et le programme d'initialisation contenu dans la mémoire morte (ROM) de la station permet lors d'une réinitialisation de générer une interruption 19 qui se trouve émulée par le programme stocké dans la mémoire PROM (2110). Cette émulation permet d'établir à l'aide des programmes UDP ou IP une connexion avec le serveur. La mémoire (2110) contient également un protocole de téléchargement PROTCHG et un driver NDIS. Dès la mise sous tension de la station, le programme d'émulation de l'interruption (IT19) provoque l'envoi d'une trame à destination du serveur par le protocole de communication UDP ou IP et le protocole de téléchargement du serveur TCHG répond à cette trame en renvoyant les tables d'allocation de fichiers (FAT)et les tables de description des secteurs (SDT) qui sont stockées dans le cache disquette CD de la mémoire vive RAM (212). Après ce transfert et après que le serveur ait envoyé un programme BOOT d'initialisation de la station, celle-ci exécute ce programme, et dès qu'elle rencontre une demande de lecture de fichier inexistant dans sa mémoire vive, génère une interruption INT13 de demande d'accès aux périphériques magnétiques qui sont inexistants sur la station. Cette demande d'accès aux périphériques magnétiques provoque l'éxécution d'un programme d'émulation qui provoque l'établissement d'une liaison avec le serveur (1) en demandant à ce dernier d'émettre un chapitre correspondant au nom du fichier dont l'ouverture a été demandée. La table d'allocation des fichiers (FAT) permet d'établir une correspondance entre le nom du fichier et le numéro de disquette, le numéro de tête, le numéro de piste et le numéro de secteur de piste où se trouverait le fichier sur une station disposant d'une disquette ou d'un disque et la table (SDT) permet d'établir une correspondance entre le numéro de secteur et le numéro de chapitre à demander au serveur. Suite à cette requête, le programme administrateur du serveur (ADM) prépare dans un fichier image (IMA) le chapitre demandé par la station. Sur la Figure 1, le fichier image comporte les fichiers du système d'exploitation MS-DOS qui sont constitués par les fichiers IO.SYS, MS-DOS.SYS, CONFIG.SYS, COMMAND.COM. A chaque éxécution du système d'exploitation MS-DOS, la station va demander l'ouverture des fichiers nécessaires à son fonctionnement, et cette ouverture de fichier va provoquer une requête de chapitre jusqu'à ce que l'ensemble des fichiers nécessaires au fonctionnement du système aient été chargés pour permettre un fonctionnement normal du terminal. A ce moment là, la configuration du système, en supposant que seul le terminal ST1 est en fonctionnement, correspond à celle représentée à la figure 3 dans laquelle on constate que la mémoire volatile (212) a été chargée avec les programmes IO.SYS, MS-DOS.SYS, CONFIG.SYS, COMMAND.COM, NETFLOP.DOS, ce dernier programme ayant pour intérêt de prendre en main la gestion de la carte de communication de façon à permettre éventuellement des téléchargements ultérieurs sur des requêtes spécifiques de secteur ou de chapitre. Le protocole de téléchargement mis en oeuvre est représenté plus en détail à la figure 2, dans lequel on voit que la station (1) émet une requête d'initialisation (BD) à laquelle le serveur répond par un message "BOOT REPLY" (BR). Suite à cette réponse la station émet la demande de chapitre en l'occurrence du premier chapitre, en envoyant une trame "start chapitre 1" (SC1) à laquelle le serveur répond par la demande (ARPD) d'adresse sur le réseau Ethernet dans le cas d'une communication multi-destinataires et la station fournit cette information par la réponse (ARPR). Suite à cette réponse, le serveur émet une trame (SDTC1) table de description du secteur du chapitre 1, puis au bout d'un temps T5 émet les données du chapitre 1 (DC1) qui peuvent être envoyées en plusieurs trames avec toujours un intervalle de temps T5 entre chaque trame. Le serveur attend un temps T1 entre le message "start chapitre 1" (SC1) demandant de commencer le téléchargement et le message de réponse demandant l'adresse. Cet intervalle de temps permet à d'autres stations, dont la mise en route se produirait concomitamment, d'émettre également leurs messages "start chapitre 1" (SC1), de la faire prendre en compte immédiatement par le serveur. A la fin de l'émission du chapitre 1, la station émet si elle constate une erreur un message SDTE d'erreur sur une partie du chapitre 1, et dans ce cas le serveur renvoie la trame SDT du chapitre 1 (SDTC1) et les données spécifiques à ce chapitre (SDC1) qui n'ont pas été reçues. A la fin le serveur envoie une trame de fin de chapitre 1 "end chapter 1" (EC1) et la station exécute ce chapitre 1 reçu, pour au cours de l'éxécution découvrir que le fichier correspondant au chapitre reçu nécessite l'appel à un autre fichier. Ceci déclenche une demande d'un autre chapitre n par une trame SCn "start chapter n". Lorsqu'elle reçoit cette demande, le serveur attend un temps T3 avant de renvoyer la trame SDTCn constituant la table de description du secteur du chapitre n et la trame DCn des données de ce chapitre. Comme précédemment si la station émet une trame d'erreur sur le chapitre n (SDTECn), le serveur va renvoyer la trame de la table de description du secteur du chapitre (SDTCn) et les données spécifiques à ce chapitre SDCn qui ont été mal reçues. Lorsque la station reçoit la trame fin de chapitre (ECn),le chapitre reçu est exécuté et en cas d'erreur sur les données, une trame d'erreur de données chapitre n (DECn) est émise pour obtenir de la part du serveur l'émission d'une trame de données de chapitre n (DCn). A nouveau l'émission se termine par une trame fin de chapitre n (Cn). Le serveur attend ensuite un temps T4 pendant lequel, s'il ne reçoit aucune requête complémentaire, il émet une trame "end remote boot" (ERB) fin du chargement à distance. Dans le cas où le serveur est relié à plusieurs stations et lorsqu' une deuxième station 2 ST2 émet une demande d'un premier chapitre SC1 en se connectant au réseau pendant un intervalle de temps T2 suivant la connexion d'une première station, la requête de cette deuxième station est immédiatement prise en compte en annulant la procédure de téléchargement de la première station et en recommençant la procédure à zéro pour l'ensemble des deux stations. Cette procédure permet d'éviter d'avoir à attendre la fin du téléchargement d'une station 1 pour télécharger une station 2 ou également d'éviter d'avoir au niveau du serveur une mémoire gérant les chapitres qui n'ont pas été reçu pour demander en fin de téléchargement les chapitres restant à recevoir, comme dans le cas du brevet US 4 958 278.

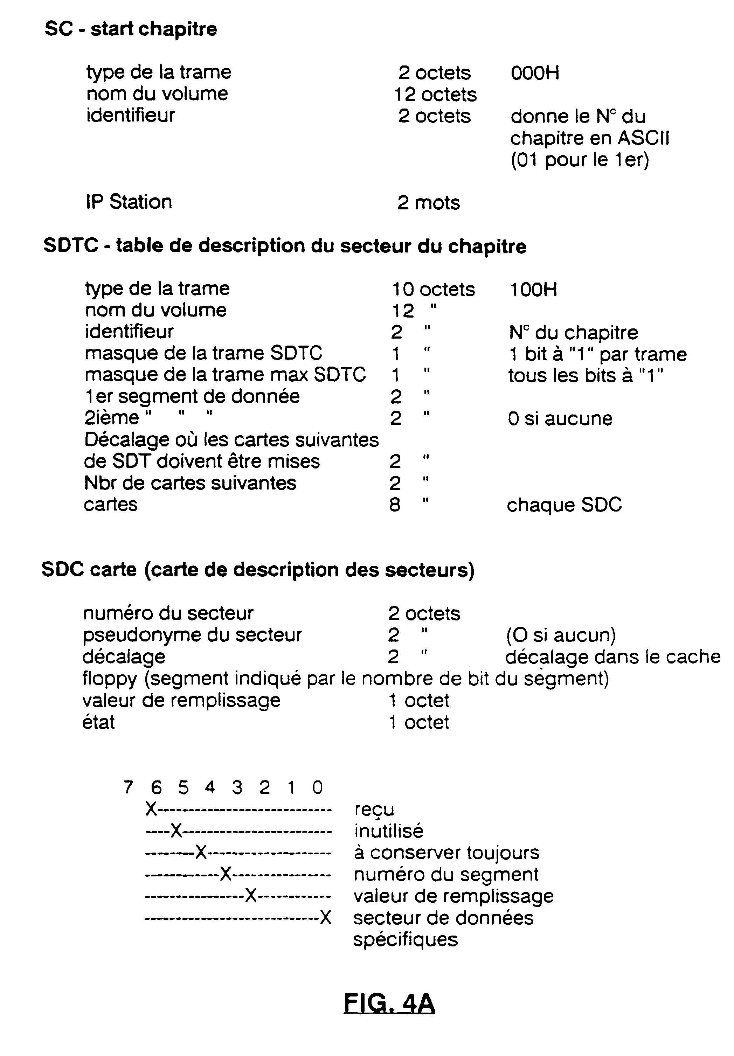

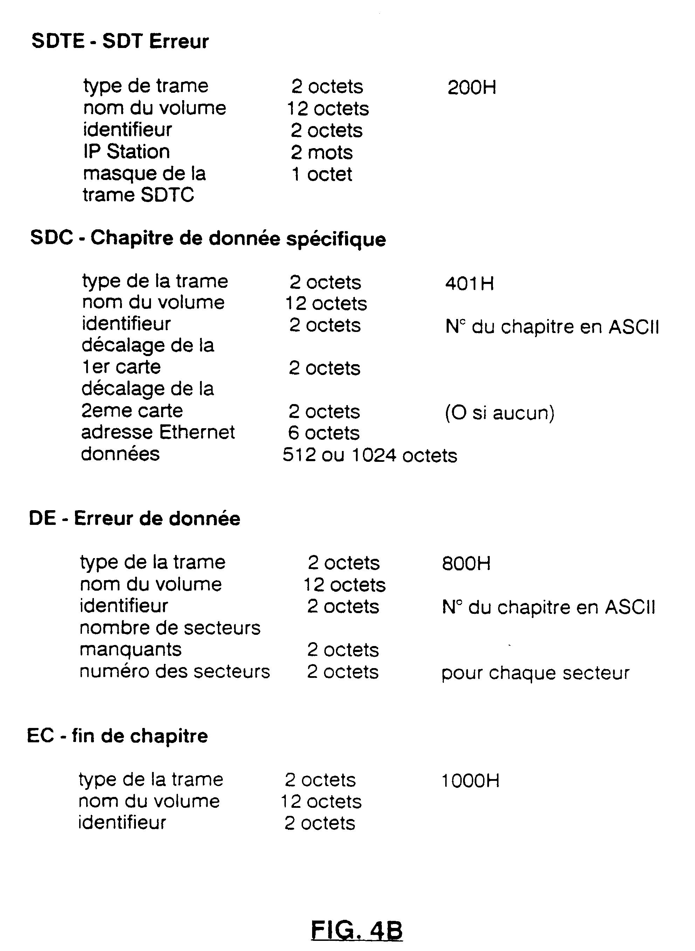

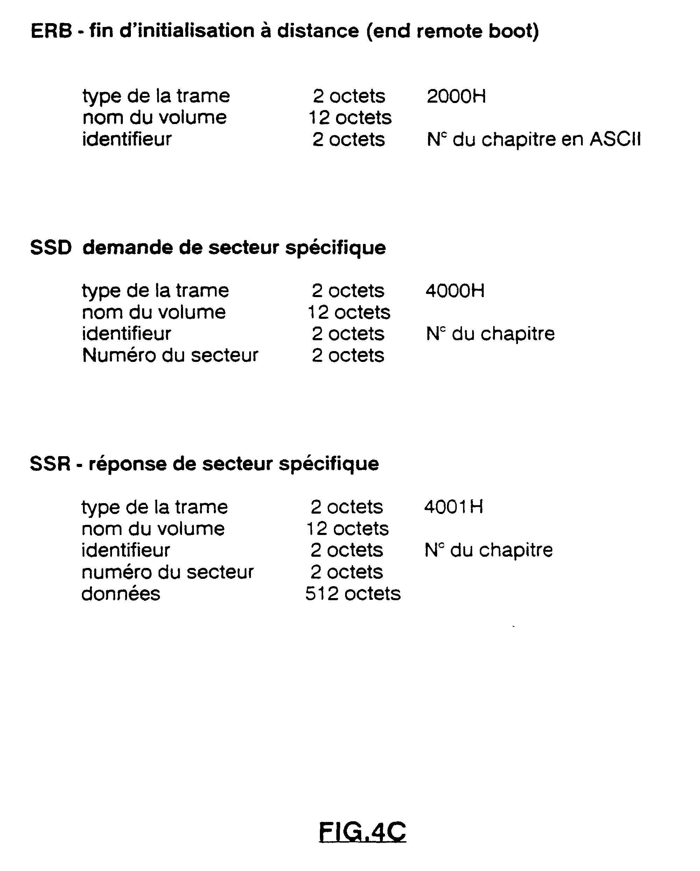

Chaque trame émise au cours de la séquence de téléchargement représentée à la figure 2 a une configuration spécifique correspondant à celle représentée aux figures 4A à 4C. Ainsi, la trame "start chapitre" (SC) permet par ces deux premiers octets, d'indiquer le type de trame et de faire savoir au serveur qu'il s'agit d'une trame "start chapitre", demandant l'émission d'un chapitre, par les douze octets suivants de définir le nom du volume dans lequel se trouve le chapitre à envoyer et par les deux octets suivants de définir l'identifieur c'est à dire le numéro du chapitre en code ASCII et par les 2 mots suivants de définir l'adresse "Ethernet" (IP Station) de la station.

Dans la suite, les informations identiques et de même format se trouvant dans les autres trames ne seront pas redécrites.

La trame SDTC table de description du secteur du chapitre contient en plus des informations : type de trames, nom du volume, identifieur, l'information définissant le masque de la trame formée sur 1 octet et indiquant par les bits A1 le nombre de trame appartenant à cette formation SDTC. Un octet supplémentaire définit le masque maximum de la trame en mettant tout les bits à "1", les deux octets suivants définissent le premier segment de données, les deux autres octets suivants le deuxième segment de données, s'il existe. Deux octets supplémentaires définissent le décalage où les cartes suivantes de la table de description de secteur sera implantée et deux octets supplémentaires définissent le nombre de cartes suivantes. Les cartes sont définies sur 8 octets chacune et comportent comme représenté par la carte SDC sur deux octets le numéro du secteur, sur deux autres octets le pseudonyme du secteur, sur les deux octets suivants le décalage dans le cache disquette, sur un octet la valeur de remplissage et sur un autre octet l'état de la carte défini par le bit 7 à "1", la valeur logique pour indiquer que le secteur a été reçu, le bit 6 à "1" pour indiquer que le secteur a été utilisé, le bit 5 à "1" pour indiquer que le secteur est à conserver en permanence, le bit 4 à "1" pour indiquer le numéro du segment, le bit 3 à "1" pour indiquer une valeur de remplissage, le bit 0 à "1" pour indiquer des données spécifiques au secteur.

La trame SDT Erreur (SDTE) est constituée comme les trames suivantes des informations concernant le type de la trame, le nom du volume, l'identifieur, l'adresse "Ethernet" de la station et le masque de la trame SDTC. La trame chapitre de données spécifiques (SDC) comporte également les informations, type de trame, nom de volume, identifieur, décalage de la première carte, décalage de la dixième carte, une adresse Ethernet sur 6 octets définissant l'adresse de la station et les données à envoyer sur 512 à 1024 octets.

La trame erreur de données (DE) comporte en plus du type de trame, du nom du volume, de l'identifieur, une information sur 2 octets indiquant le nombre de secteur manquant et sur 2 autres octets pour chaque secteur manquant, le numéro du secteur manquant.

La trame EC fin de chapitre et la trame fin d'initialisation "End remote boot" (ERB) comportent le type de trame, le nom du volume.

La trame SSD demande de secteur spécifique comporte outre le type de trame, le nom du volume, l'identifieur, le numéro du secteur spécifique demandé sur 2 octets.

La trame SSR comporte en plus des informations précédentes les données sur 512 octets.

Le programme d'émulation de l'interruption 13 va par le biais du registre d'état des fonctions émulées, modifier les informations contenues dans les registres du processeur (213) de la station selon le tableau indiqué ci-dessous :

| | |
|---|---|
| 0 | reset remet à zéro le flag "carry" (NY) |
| 1 disk_status | prélève le status disquette (fonction "read") et reset carry (NY) |
| 2 read | voir description ci-dessous |
| 3 write | code retour "write protect" et carry en erreur (CY) |
| 4 verify | reset carry (NY) |
| 5 format | set carry en erreur (CY) |
| 8 parametres | prélève les paramètres disquette et reset carry (NY) |
| d special | spéciales téléchargement. (voir "Status du TCHG Après réception de "end_remote_boot" - avec Netflop") - Avec les registres DL=0, AL=0 il s'agit de la fonction "change Data Segment" entre la PROM et Netflop - Avec les registres DL=0, AL=1, il s'agit de la fonction "shutdown" de la PROM |
| 15 read_dasd | code retour "change_line avail." et reset carry (NY) |
| 16 change_line | code retour "non actif" et reset carry (NY) |
| 17 set_dasd | code retour OK et reset carry (NY) |
| 18 set_media | code retour "write protect" et carry en erreur (CY) |

Tous les autres codes fonction retourne un code retour 01

Ainsi on peut constater que dans le cas de la fonction spéciale représentée par le code compris entre 9 et 15, les registres DL et AL du microprocesseur seront à charger avec des valeurs logiques qui indiqueront soit un changement de segment de données, soit la fonction fermeture "shutdown" de la PROM. Les autres fonctions émulées permettent la modification des bits (CY) et (NY) du registre d'état du microprocesseur.

Lorsque le fichier CONFIG.SYS représenté à la Fig. 3contenant les fichiers PROTMAN.DOS, ELNKII.DOS, NEMM.DOS et TCPDRV.DOS assurant respectivement les fonctions de gestion du protocole, de driver de carte, de gestion mémoire et de partie résidante du programme de communication ont été chargées et que l'ensemble du système d'exploitation ainsi que le programme NETBIND.EXE ont été chargé, le serveur émet une trame de fin d'utilisation "end remote boot" (ERB) par laquelle il indique à la PROM que l'ensemble des programmes ont été chargé et le protocole de téléchargement contenu dans la mémoire PROM termine ce téléchargement par plusieurs actions qui consistent à lancer l'éxécution du programme NETBIND qui utilise le programme ELNKII.DOS pour accéder au réseau, ce programme NETBIND lance l'éxécution de NETFLOP qui permet de charger le segment de donnée et récupère le contexte de la cession gérée par la PROM. NETFLOP effectue également un arrêt normal de la PROM (Shutdown) avec reset de la carte réseau et restauration du vecteur IRQ5 sur l'ancien vecteur BIOS et une désinstallation du gestionnaire des temporisations programmables du processus de téléchargement. Cet arrêt provoque le basculement de la gestion des interruptions et en particulier de l'interruption 13 de la PROM vers le programme NETFLOP. Cette nouvelle gestion permet d'avoir un comportement paramétrable différent de celui figé de la PROM. La gestion de l'INT13 par la PROM est valide tant que l'arrêt n'est pas effectué (Shutdown). Après l'arrêt l'interruption 13 de la PROM appelle soit le vecteur interruption 13 de NETFLOP, soit l'ancien vecteur BIOS. Cet arrêt s'effectue par l'éxécution de la séquence suivante écrite pour un microprocesseur (213) du type INTEL 386 ou 482 et la transposition à d'autres microprocesseurs est à la portée de l'homme de métier.

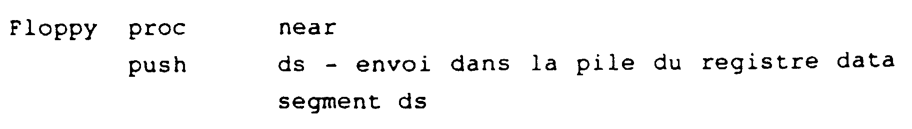

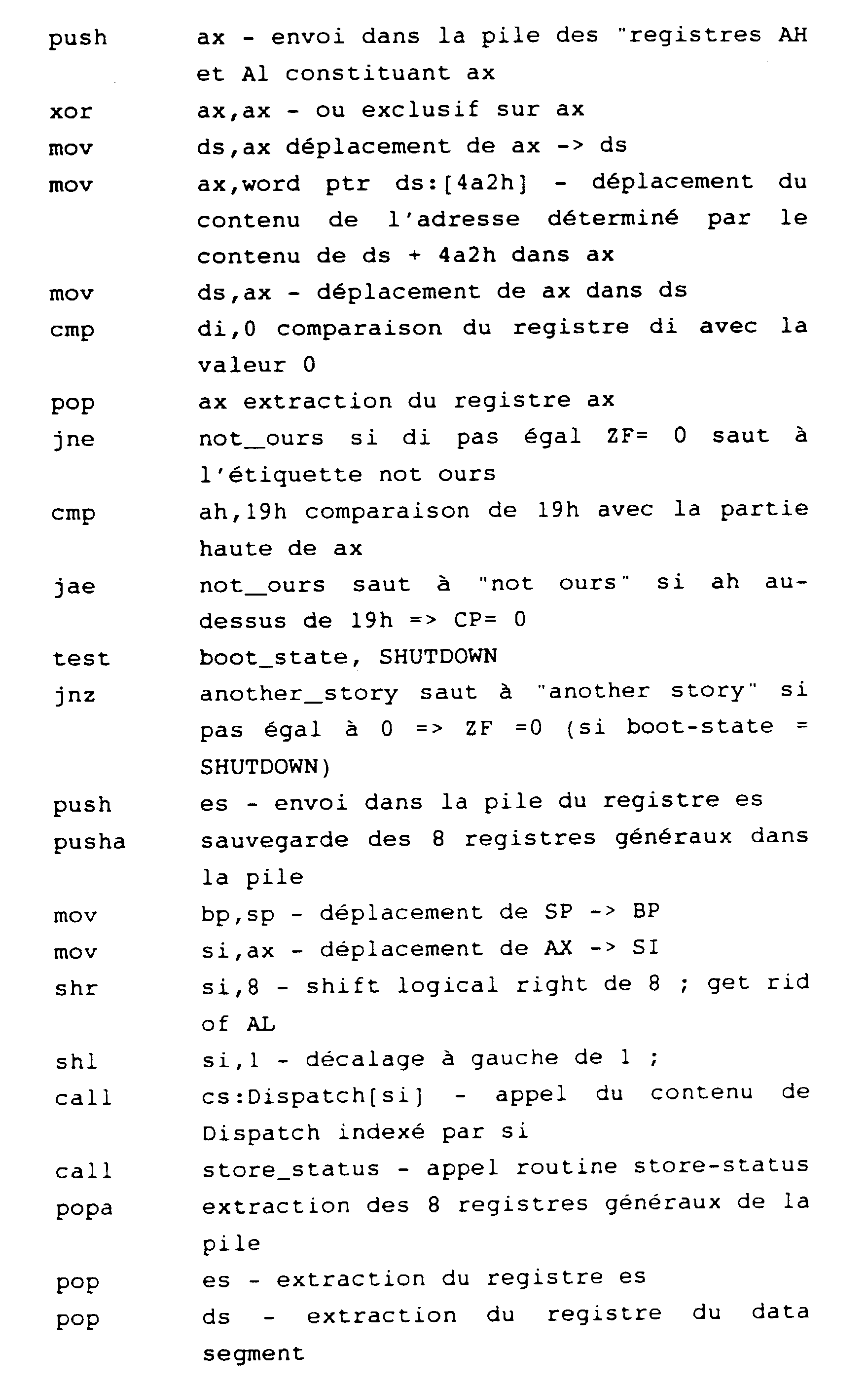

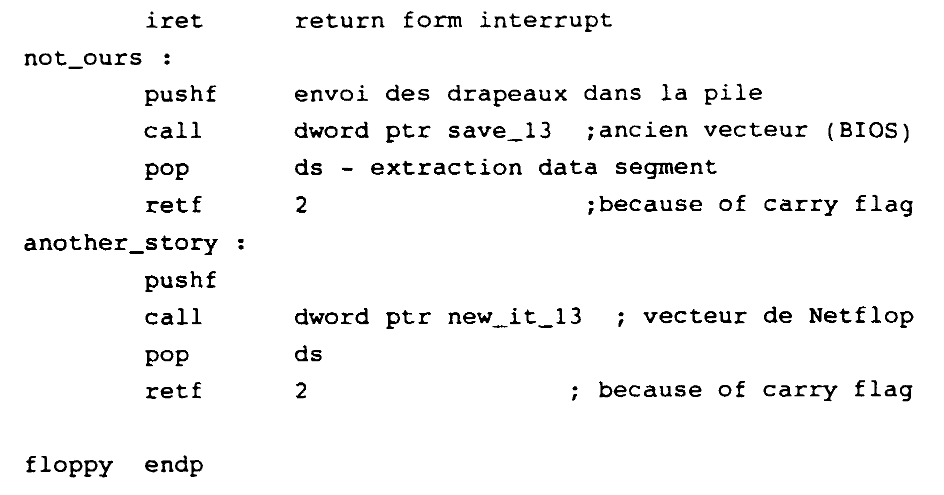

La gestion de l'INT13 par NETFLOP fait appel à des paramètres "KEEP FLOPPY" et "KEEP CACHE" déclarés dans un fichier PROTOCOL.INI qui en fonction de leurs états provoquent le fonctionnement suivant :
KEEPCACHE = YES
KEEPFLOPPY = YES

- INIT13h Cherche le secteur dans le cache disquette. Si le secteur ne s'y trouve plus ou pas, une requête "specific sector" est générée vers le serveur TCHG. Celui-ci accède directement à la disquette (celle dont la FAT et directory principale ont été envoyés à la station doit être impérativement insérée dans le lecteur du serveur) et répond à la station par une trame "specific sector reply" (SSR) adressée en multicast Ethernet mais comportant dans la partie protocole du TCHG, l'adresse IP de la station destinataire. Les stations filtrent ce champ sur réception d'une telle trame.
   Ainsi, une mini gestion de fichier reste disponible pour la station, Après la fin de téléchargement.

KEEPCACHE = YES
KEEPFLOPPY = NO

- INIT13h Cherche le secteur dans le cache disquette. Si le secteur ne s'y trouve plus ou pas, un code retour "Secteur inaccessible en lecture" est rendu au système.
- Le cache reste actif en mémoire.
   KEEPCACHE = NO
   KEEPFLOPPY = YES
- INIT13h Une requête "specific sector" est générée vers le serveur TCHG. Celui-ci accède directement à la disquette (celle dont la FAT et directory principale ont été envoyés à la station doit être impérativement insérée dans le lecteur du serveur) et répond à la station par une trame "specific sector reply" adressée en mulicast Ethernet mais comportant dans la partie protocole du TCHG, l'adresse IP de la station destinataire. Les stations filtrent ce champ sur réception d'une telle trame.
   Ainsi, une mini gestion de fichier reste disponible pour la station, Après la fin de téléchargement. (voir performances, contraintes lié au changement de disquette).
- Le cache est inactif, libérant ainsi la mémoire pour les applications.
   KEEPCACHE = NO
   KEEPFLOPPY = NO
- INIT13h Un code retour "secteur inaccessible en lecture" est rendu au système.
- Le cache est inactif, libérant ainsi la mémoire pour les applications.

Le paramètre "KEEPCACHE=YES" suppose que la plage mémoire utilisée par le CACHE ne risque pas de rentrer en conflit avec une application DOS.

### Exemple :

Si le choix du segment CACHE est 7000H, une application utilisant ce segment écrasera les données du cache, entraînant un risque très important de blocage du système.

Par contre, les segments 0D000h restent disponibles pour le cache, à quelqu'instant que ce soit (en dehors de toute utilisation de gestionnaires de mémoire paginée (EMS) utilisant bien sûr cette même plage mémoire).

Note : les segments 0D000h et/ou 0E000h, s'ils sont utilisés, ne sont par libérés Après la réception de "end remote_boot", c'est à dire précisément, que :
- sur réception de la SDT du chapitre 1, Après reconnaissance des segments de travail ODOOOh et/ou 0E000h, ces mêmes segments sont validés.
- sur réception de "end_remote_boot", ces segments ne sont pas dévalidés.

## Revendications

1. Procédé de téléchargement par un serveur d'au moins un terminal comprenant, une mémoire volatile (RAM) au moins un processeur, une carte de télécommunication permettant la connexion au serveur du réseau, le dit serveur étant pourvu de moyen de télécommunication et de moyen de mémorisation de capacité suffisant pour stocker le protocole de communication, le système d'exploitation des terminaux recopié dans un fichier image, son propre système d'exploitation et les programmes d'application caractérisé en ce qu'il comporte une procédure de téléchargement d'un programme d'amorçage, consistant à transformer la première interruption de lecture du bloc d'amorçage sur le disque local produite par un terminal à la suite de sa mise sous tension en une demande de lecture d'un fichier image mémorisé sur le serveur, le programme de transformation des interruptions (EMUL INT) étant mémorisé dans une mémoire non volatile (PROM) de la carte de communication.

2. Procédé selon la revendication 1 caractérisé en ce que l'étape de téléchargement du programme d'amorçage consiste à charger dans la mémoire volatile RAM le secteur d'amorçage (BOOT) à lancer l'exécution de ce fichier d'amorçage, à transformer les interruptions de demande d'accès à des fichiers des périphériques magnétiques inexistants sur le terminal en demandes de lecture du fichier image correspondant sur le serveur par une procédure de transformation des coordonnées.

3. Procédé selon la revendication 2 caractérisé en ce que la procédure de transformation des coordonnées consiste à transformer les coordonnées des secteurs physiques des fichiers des périphériques magnétiques en une numérotation logique de chapitre du fichier image correspondant au secteur du fichier appelé par une table de correspondance secteur, à transmettre vers le serveur la demande de lecture de chapitre à émettre vers l'ensemble des terminaux les chapitres des fichiers images.

4. Procédé selon une des revendications 1 à 3 caractérisé en ce que la mémoire volatile RAM du terminal contient après le premier téléchargement du programme d'amorçage, une table d'allocation des fichiers (FAT) établissant une correspondance entre le numéro de disquette, le numéro de tête, le numéro de piste, le numéro de secteur de piste et le nom du fichier ainsi qu'une table de description des secteurs (SDT) établissant une correspondance entre le numéro de disquette, le numéro de piste, le numéro de secteur de piste et le numéro de chapitre du fichier image du serveur.

5. Procédé selon une des revendications précédentes caractérisé en ce qu'il permet le téléchargement des fichiers du système d'exploitation constitué par les fichiers IO.SYS, MSDOS.SYS CONFIG.SYS et COMMAND.COM.

6. Procédé selon la revendication 4 caractérisé en ce que la table d'allocation des fichiers (FAT) est mémorisée avec le status éternel (KEEP FOR EVER) dans la mémoire vive RAM, ce status étant indiqué par un bit du mot d'état de la carte de description des secteurs.

7. Procédé selon une des revendications précédentes caractérisé en ce que lorsqu'un terminal émet une demande de premier chapitre à destination du serveur celui-ci attend un temps T1 avant de répondre pour s'assurer que d'autres terminaux ne vont pas avoir la même demande.

8. Procédé selon une des revendications précédentes caractérisé en ce qu'une demande de premier chapitre par une autre station arrivant avant l'écoulement d'un temps T2 suivant la demande du même premier chapitre par une première station est prise en compte immédiatement et la procédure de téléchargement de l'ensemble des stations ayant émis les demandes est reprise à zéro pour ces stations.

9. Procédé selon une des revendications précédentes caractérisé en ce que le serveur attend un temps T3 entre l'émission de chaque chapitre et un temps T5 entre chaque émission de trame.

10. Procédé selon une des revendications précédentes caractérisé en ce que le serveur ferme la session au bout d'un temps T4 après l'émission d'une trame de fin de chapitre, sans qu'aucune autre station n'ait émis une requête.

11. Procédé selon une des revendications 7 à 9 caractérisé en ce que les temps T1 à T5 sont paramétrables.

12. Procédé selon une des revendications 1 à 6 caractérisé en ce qu'il comporte une étape d'envoi de trames de données spécifiques aux chapitres qui incluent l'adresse Ethernet de la station réceptrice.

13. Procédé selon la revendication 4 caractérisé en ce que le terminal lors de l'exécution d'une instruction d'ouverture de fichier, lit la table d'allocation des fichiers ; détermine ainsi le secteur puis lit la table de description des secteurs pour déterminer le chapitre à rechercher, exécute le chapitre, si le chapitre réside dans la RAM exécutée, émet une requête de téléchargement à destination du serveur, si le chapitre est absent.

14. Procédé selon la revendication 14 caractérisé en ce que la table de description des secteurs comprend un octet d'état indiquant par un bit la réception du chapitre, par un autre bit son utilisation, par un troisième bit le statut "à conserver toujours", par un quatrième bit le numéro de segment, par un cinquième bit la présence d'une valeur de remplissage et par un sixième bit un secteur spécifique de donnée.

15. Procédé selon une des revendications précédentes caractérisé en ce que le terminal comporte un registre d'état de la fonction d'interruption émulée permettant dans le cas de la réception d'une trame de fin de téléchargement de déterminer par lecture des registres DL et AL du microprocesseur (213) du terminal s'il faut effectuer une fonction de "chargement de segment de donnée" ou une fonction de clôture ("Shutdown").

## Patentansprüche

1. Verfahren zum Fernladen wenigstens eines Terminals durch einen Server, wobei das Terminal einen flüchtigen Speicher (RAM), wenigstens einen Prozessor und eine Telekommunikationskarte enthält, die den Anschluß an den Server des Netzes ermöglicht, wobei der Server mit Telekommunikationsmitteln und mit Speichermitteln mit einer Kapazität versehen ist, die ausreicht, um das Kommunikationsprotokoll, das Betriebssystem der Terminals, das in eine Bilddatei kopiert ist, sein eigenes Betriebssystem und die Anwendungsprogramme zu speichern, dadurch gekennzeichnet, daß es eine Prozedur zum Fernladen eines Ureingabeprogramms enthält, die darin besteht, die erste Unterbrechung zum Lesen des Ureingabeblocks auf der lokalen Platte, die von einem Terminal erzeugt wird, wenn es unter Spannung gesetzt wird, in eine Anforderung zum Lesen einer im Server gespeicherten Bilddatei umzusetzen, wobei das Programm zum Umsetzen von Unterbrechungen (EMUL INT) in einem Festwertspeicher (PROM) der Kommunikationskarte gespeichert ist.

2. Verfahren nach Anspruch 1, dadurch gekennzeichnet, daß der Schritt des Fernladens des Ureingabeprogramms darin besteht, in den flüchtigen Speicher RAM den Ureingabesektor (BOOT) zu laden, die Ausführung dieser Ureingabedatei zu starten und die Unterbrechungen der Zugriffsanforderungen auf Dateien von Magnet-Peripheriegeräten, die nicht im Terminal vorhanden sind, in Anforderungen zum Lesen der entsprechenden Bilddatei im Server durch eine Koordinatentransformationsprozedur umzusetzen.

3. Verfahren nach Anspruch 2, dadurch gekennzeichnet, daß die Koordinatentransformationsprozedur darin besteht, die Koordinaten physischer Sektoren von Dateien von Magnet-Peripheriegeräten in eine logische Kapitelnumerierung der Bilddatei, die dem Sektor der aufgerufenen Datei entspricht, durch eine Sektorentsprechungstabelle umzusetzen, die Anforderung zum Lesen des Kapitels an den Server zu übertragen und die Kapitel der Bilddateien an sämtliche Terminals zu senden.

4. Verfahren nach einem der Ansprüche 1 bis 3, dadurch gekennzeichnet, daß der flüchtige Speicher RAM des Terminals nach dem ersten Fernladen des Ureingabeprogramms eine Dateizuordnungstabelle (FAT), die eine Korrespondenz zwischen der Diskettennummer, der Kopfnummer, der Spurnummer, der Spursektornummer und dem Dateinamen herstellt, sowie eine Sektorbeschreibungstabelle (SDT), die eine Entsprechung zwischen der Diskettennummer, der Spurnummer, der Spursektornummer und der Kapitelnummer der Bilddatei des Servers herstellt, enthält.

5. Verfahren nach einem der vorangehenden Ansprüche, dadurch gekennzeichnet, daß es das Fernladen von Dateien des Betriebssystems ermöglicht, das durch die Dateien IO.SYS, MSDOS.SYS, CONFIG.SYS und COMMAND.COM gebildet ist.

6. Verfahren nach Anspruch 4, dadurch gekennzeichnet, daß die Dateizuordnungstabelle (FAT) mit dem Dauerstatus (KEEP FOR EVER) im flüchtigen Speicher RAM gespeichert ist, wobei dieser Status durch ein Bit des Zustandsworts der Sektorbeschreibungskarte angegeben wird.

7. Verfahren nach einem der vorangehenden Ansprüche, dadurch gekennzeichnet, daß der Server dann, wenn ein Terminal eine Anforderung eines ersten Kapitels zu diesem Server schickt, eine Zeit T1 vor seiner Antwort abwartet, um sicherzustellen, daß die anderen Terminals nicht die gleiche Anforderung haben.

8. Verfahren nach einem der vorangehenden Ansprüche, dadurch gekennzeichnet, daß eine Anforderung des ersten Kapitels durch eine andere Station, die vor dem Ablauf einer Zeit T2 nach der Anforderung desselben ersten Kapitels durch eine erste Station ankommt, sofort berücksichtigt wird, wobei die Fernladeprozedur für die Gesamtheit der Stationen, die Anforderungen gesendet haben, für diese Stationen auf null zurückgesetzt wird.

9. Verfahren nach einem der vorangehenden Ansprüche, dadurch gekennzeichnet, daß der Server eine Zeit T3 zwischen dem Senden jedes Kapitels und eine Zeit T5 zwischen jedem Senden des Rahmens wartet.

10. Verfahren nach einem der vorangehenden Ansprüche, dadurch gekennzeichnet, daß der Server die Sitzung am Ende einer Zeit T4 nach dem Senden eines Kapitelenderahmens schließt, wenn keine andere Station eine Anforderung gesendet hat.

11. Verfahren nach einem der Ansprüche 7 bis 9, dadurch gekennzeichnet, daß die Zeiten T1 bis T5 parametrisierbar sind.

12. Verfahren nach einem der Ansprüche 1 bis 6, dadurch gekennzeichnet, daß es einen Schritt des Schickens von für die Kapitel spezifischen Datenrahmen, die die Ethernetadresse der Empfangsstation enthalten, enthält.

13. Verfahren nach Anspruch 4, dadurch gekennzeichnet, daß das Terminal bei der Ausführung eines Dateiöffnungsbefehls die Dateizuordnungstabelle liest; damit den Sektor bestimmt und dann die Sektorbeschreibungstabelle liest, um das zu suchende Kapitel zu bestimmen; das Kapitel ausführt, falls das Kapitel im ausgeführten RAM vorhanden ist, und eine Fernladeanforderung zum Server sendet, falls das Kapitel nicht vorhanden ist.

14. Verfahren nach Anspruch 14, dadurch gekennzeichnet, daß die Sektorbeschreibungstabelle ein Zustandsbyte enthält, das durch ein Bit den Empfang des Kapitels, durch ein weiteres Bit seine Verwendung, durch ein drittes Bit den Status "stets beibehalten", durch ein viertes Bit die Segmentnummer, durch ein fünftes Bit das Vorhandensein eines Füllwertes und durch ein sechstes Bit einen spezifischen Datensektor angibt.

15. Verfahren nach einem der vorangehenden Ansprüche, dadurch gekennzeichnet, daß das Terminal ein Zustandsregister der emulierten Unterbrechungsfunktion enthält, die im Fall des Empfangs eines Fernladeenderahmens ermöglicht, durch Lesen der Register (DL und AL) des Mikroprozessors (213) des Terminals zu bestimmen, ob eine Funktion "Datensegment laden" oder eine Schließfunktion ("Shutdown") ausgeführt werden soll.

## Claims

1. Method of downloading by a server from at least one terminal comprising a volatile memory (RAM), at least one processor, a telecommunications card permitting connection to the network server, said server being provided with telecommunications means and memory means of sufficient capacity to store the communications protocol, the operating system of the terminals copied over into an image file, its own operating system and the application programs, characterised in that it comprises a procedure for downloading a boot program, consisting in transforming the first read interrupt for the boot block on the local disk, produced by a terminal following its being switched on, into a request to read an image file stored on the server, the interrupt transformation program (EMUL INT) being stored in a non-volatile memory (PROM) of the communications card.

2. Method according to Claim 1 characterised in that the step of downloading the boot program consists in loading the boot sector (BOOT) into the volatile memory (RAM), in launching the execution of this boot file, in transforming the interrupts requesting access to files of magnetic peripherals that do not exist on the terminal into requests to read the corresponding image file on the server by a procedure of transforming the co-ordinates.

3. Method according to Claim 2 characterised in that the procedure for transforming co-ordinates consists in transforming the co-ordinates of the physical sectors of the files of the magnetic peripherals into a logical chapter numbering of the image file corresponding to the sector of the file called up by a sector correspondence table, in transmitting to the server the chapter read request, in sending the chapters of the image files to all the terminals.

4. Method according to one of Claims 1 to 3 characterised in that the volatile memory (RAM) of the terminal contains, after the first downloading of the boot program, a file allocation table (FAT) establishing a correspondence between the floppy disk number, the header number, the track number, the track sector number and the file name, and also a sector description table (SDT) establishing a correspondence between the disk number, the track number, the track sector number and the chapter number of the image file of the server.

5. Method according to one of the preceding claims characterised in that it permits the downloading of files from the operating system constituted by the files IO.SYS, MSDOS.SYS CONFIG.SYS and COMMAND.COM

6. Method according to Claim 4 characterised in that the file allocation table (FAT) is stored with eternal status (KEEP FOR EVER) in the random access memory RAM, this status being indicated by a bit of the status word of the sector description card.

7. Method according to one of the preceding claims characterised in that, when a terminal sends a first-chapter request to the server, the latter waits for a period T1 before responding, to ensure that other terminals are not going to have the same request.

8. Method according to one of the preceding claims characterised in that a first-chapter request by another station arriving before the elapsing of a period T2 following the request for the same first chapter by a first station is taken into account immediately and the procedure of downloading from all stations sending requests is restarted at zero for these stations.

9. Method according to one of the preceding claims characterised in that the server waits for a period T3 between the sending of each chapter and a period T5 between each sending of a frame.

10. Method according to one of the preceding claims characterised in that the server closes the session at the end of a period T4 after the sending of an end-of-chapter frame, without any other station having sent a request.

11. Method according to one of Claims 7 to 9 characterised in that the periods T1 to T5 can be assigned parameters.

12. Method according to one of Claims 1 to 6 characterised in that it comprises a step of sending data frames specific to the chapters that include the Ethernet address of the receiving station.

13. Method according to Claim 4 characterised in that, when executing an instruction to open a file, the terminal reads the file allocation table; in this way determines the sector then reads the sector description table to determine the chapter to be sought, executes the chapter if the chapter resides in the executed RAM, sends a download request to the server if the chapter is absent.

14. Method according to Claim 14 characterised in that the sector description table comprises a status byte indicating by one bit the receiving of the chapter, by another bit its use, by a third bit the "keep for ever" status, by a fourth bit the segment number, by a fifth bit the presence of a fill value and by a sixth bit a specific data sector.

15. Method according to one of the preceding claims characterised in that the terminal contains a status register for the emulated interrupt function making it possible, in the case of receiving an end-of-download frame, to determine by reading the registers DL and AL of the microprocessor (213) of the terminal, whether it is necessary to perform a "data segment load" function or a shutdown function "(Shutdown)".
